# EUROPEAN PATENT APPLICATION

(11) **EP 4 438 930 A1**
(43) Date of publication of application: **02.10.2024**
(21) Application number: 24164648.8
(22) Date of filing: 19.03.2024
(51) Int. Cl.: F16K 5/06, F16K 37/00

(54) **VALVE ASSEMBLY CONFIGURED FOR POSITION AND CONTROL WITHIN A FLUID LINE**

(30) Priority: 21.03.2023 US 202363453578 P; 05.03.2024 US 202418595889
(71) Applicant: The Boeing Company, Arlington, VA 22202 (US)
(72) Inventor: Maue, Paul Jeremy, Arlington, 22202 (US); Ramsey, Dustin Henry, Arlington, 22202 (US); Johnson, Benjamin A., Arlington, 22202 (US); Wright, Elaine Cheng, Arlington, 22202 (US); Groat, John Everett, Arlington, 22202 (US)
(74) Representative: Witte, Weller & Partner Patentanwälte mbB

(57) **Abstract**

A valve assembly (20) that controls a flow of fluid along a fluid line (100). The valve assembly includes a valve body (21) sized to fit within the fluid line with the valve (22) configured to rotate within the fluid line between an open position and a closed position. A drive shaft (24) is connected to and extends outward from a first side of the valve body. An actuator is connected to the drive shaft and configured to rotate the valve between the open position and the closed position. A sensor (40) is configured to sense a rotation position of the valve with the sensor positioned at a second side of the valve away from the actuator.

## Description

### TECHNOLOGICAL FIELD

The present disclosure relates generally to a valve assembly and control circuit and, more particularly, to a valve assembly that includes a valve body and a sensor that detects a rotational position of a valve.

### BACKGROUND

A valve assembly includes a valve body that is positioned within a fluid line. The valve is positionable at different rotational positions to selectively control the flow of fluid. For example, the valve can be positioned between an open position to allow for full fluid flow, a closed position to prevent fluid flow, and one or more intermediate positions that provide for various intermediate fluid flows. The valve assembly also includes an actuator that provides a force to rotate the valve body to the desired rotational position.

Existing valve assemblies detect the rotational position of the valve based on the actuator rather than the position of the valve itself. The position of the valve is implicitly derived according to an actuator voltage transition. As such, these previous valve assemblies have latent failure modes. For example, a failure of the drive train of the actuator would prevent the valve from moving to the desired rotational position. This drive train failure would not be detectable through monitoring electrical aspects of the actuator. Further, valve position control has been limited to just two positions: an open position and a closed position. The ability to determine an intermediate position of the valve is not possible.

Valve assemblies include various components downstream from the actuator that function to rotate the valve. Existing valve assemblies that monitor aspects of the actuator are not able to detect some issues. If failures occur downstream of the actuator or in limited locations within the actuator the valve body will not move despite the false-positive indication which is a latent failure.

Detecting issues with existing actuation of existing valve assemblies can be difficult. Existing solutions with respect to detecting valve drive train failures frequently include maintenance activities or/and automated system tests to confirm valve assembly operation and valve position. This testing and monitoring adds complexity to designing valve assemblies to provide for the actuator to fail prior to the drive train. When the valve assembly is mounted in a vehicle, such as a commercial aircraft, this can result in many undesirable aircraft dispatch delays if the failures occur prior to departure.

### SUMMARY

One aspect is directed to a valve assembly that controls a flow of fluid along a fluid line. The valve assembly comprises a valve body sized to fit within the fluid line with the valve configured to rotate within the fluid line between an open position and a closed position. A drive shaft is connected to and extends outward from a first side of the valve body. An actuator comprising a motor with the actuator connected to the drive shaft and configured to rotate the valve between the open position and the closed position. A sensor is configured to sense a rotation position of the valve with the sensor positioned at a second side of the valve away from the actuator.

In another aspect, the sensor is an optical encoder connected directly to the valve.

In another aspect, the valve assembly comprises a body (for example, a housing) with an inlet and an outlet to mount to the fluid line with the valve body comprising an interior space sized to receive the sensor to protect the sensor.

In another aspect, a computing device is configured to: activate the actuator to move the valve to a commanded position within the fluid line; and receive signals from the sensor indicating the rotational position of the valve within the fluid line.

In another aspect, the computing device is further configured to detect a difference between the commanded position of the valve and the sensed rotational position of the valve.

In another aspect, the sensor (that can be a redundant sensor) is a rotation sensor and further comprising a current sensor configured to detect a current of the motor with the computing device configured to determine an open/closed position of the valve based on the current of the motor and to compare the position with the rotational position of the valve based on the signals from the rotation sensor.

In another aspect, the sensor is placed directly on the valve.

In another aspect, the sensor detects the rotation of the valve based on movement on a point on the second side of the valve body that is directly opposite from the drive shaft on the first side of the valve body.

In another aspect, the valve assembly is a ball valve.

One aspect is directed to a valve assembly that controls a flow of fluid along a fluid line. The valve assembly comprises a valve sized to fit within the fluid line with the valve configured to rotate within the fluid line between an open position and a closed position. A spindle (also referred to herein as a follower shaft) is connected to and extends outward from a second side of the valve opposite from the drive shaft. An actuator is configured to rotate the valve. A current sensor is configured to detect an electrical current of the actuator during rotation of the valve. A rotation sensor is positioned directly on the spindle to detect a rotational position of the valve.

In another aspect, a computing device configured to: receive first signals from the current sensor and timing to determine a first rotational position of the ball valve based on the first signals; receive second signals from the rotation sensor and determine a second rotational position of the ball valve based on the second signals; and determine a difference between the first rotational position and the second rotational position.

In another aspect, the computing device is configured to transmit an error signal when the difference between the first rotational position and the second rotational position is greater than a predetermined amount.

In another aspect, a housing is configured to connect to the fluid line with the housing comprising an interior space configured to house the spindle and the rotation sensor.

One aspect is directed to a method of determining a rotational position of a valve that is positioned within a fluid line. The method comprises: activating an actuator that is connected to a valve positioned within an interior of a fluid line and rotating the valve with the actuator being connected to a first side of the valve; sensing rotation of a point on the valve with the point being on a second side of the valve opposite from the first side; and determining a rotational position of the valve based on the sensed rotation of the point.

In another aspect, the method further comprises: receiving a command to rotate the valve to a predetermined position within the fluid line; activating the actuator and rotating the valve from an initial position to a second rotational position; and sensing the rotation of the point on the valve.

In another aspect, the method further comprises determining that the rotational position of the valve based on the sensed rotation is different than a commanded rotational position.

In another aspect, the method further comprises: monitoring a current of the actuator and determining a rotational position of the valve based on the current and timing; and comparing the rotational position of the valve based on the current and timing with the rotational position of the valve based on the sensed rotation.

In another aspect, the method further comprises transmitting a signal when the difference between the rotational positions exceeds a predetermined amount.

One aspect is directed to a method of determining a rotational position of a valve that is positioned within a fluid line. The method comprises: receiving a signal to position the valve at a commanded position with the valve being positioned within the fluid line; activating an actuator that is connected to a valve positioned within an interior of a fluid line and rotating the valve based on the commanded position; sensing rotation of a point on the valve with the point being on a side of the valve away from the actuator; determining a rotational position of the valve based on the sensed rotation of the point; and determining a difference between the commanded position and the rotational position.

In another aspect, the method further comprises sending a signal when the difference exceeds a predetermined amount.

In another aspect, the method further comprises: sensing an electrical current of the actuator when the actuator is activated and rotating the valve to the commanded position using timing; determining a rotational position of the valve based on the electrical current; and determining a difference between the rotational position based on the electrical current and timing and the rotational position based on the sensed rotation of the point.

One aspect is directed to a method of determining a rotational position of a valve that is positioned within a fluid line. The method comprises: receiving a signal to position the valve at a commanded position, the valve body being positioned within the fluid line; activating an actuator that is connected to a valve body positioned within an interior of a fluid line and rotating the valve based on the commanded position; sensing an electrical current of the actuator while the valve is being rotated; sensing rotation of a point on the valve with the point being on a side of the valve away from the actuator; determining a rotational position of the valve based on the sensed rotation of the point; determining a rotational position of the valve based on the sensed current; and determining a difference between the determined rotational positions.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a schematic diagram of a valve assembly mounted to a fluid line.
Figure 2A is a schematic diagram of a valve assembly in an open position mounted to a fluid line.
Figure 2B is a schematic diagram of a valve assembly in a closed position mounted to a fluid line.
Figure 3 is a schematic diagram of a valve assembly mounted to a fluid line.
Figure 4 is a schematic diagram of a computing device.
Figure 5 is a schematic diagram of a valve assembly mounted within a vehicle.
Figure 6 is a flowchart diagram of a method of determining a rotational position of a valve that is positioned within a fluid line.
Figure 7 is a flowchart diagram of a method of determining a rotational position of a valve that is positioned within a fluid line.
Figure 8 is a flowchart diagram of a method of determining a rotational position of a valve that is positioned within a fluid line.

### DETAILED DESCRIPTION

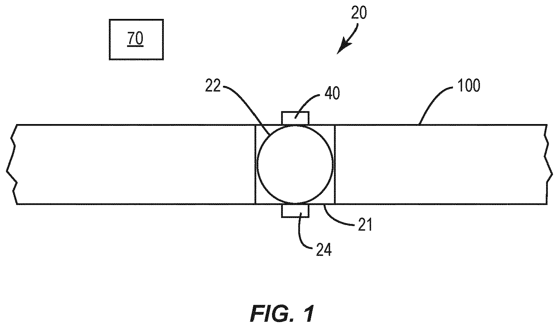

The present application is directed to a valve assembly configured to detect a rotational position of a valve. Figure 1 illustrates an example of a valve assembly 20 that includes a valve 22 housed within a valve body 21, with the valve 22 positioned within a fluid line 100. The valve 22 is powered to be movable to different rotational positions within the fluid line 100 to control the flow of fluid. A sensor 40 is positioned on an opposing side of the valve 22 from the drive shaft 24. The sensor 40 detects the rotational position of the valve 22.

In some examples, the valve assembly 20 also includes a computing device 70 that controls the operation. The computing device 70 sends and/or receives signals from an actuator 30 and sensor 40 to control the positioning of the valve 22 and thus the resultant flow of fluid along the fluid line 100.

In some examples, the sensor 40 is positioned on the non-driven side of the valve 22. In some examples, this placement includes positioning the sensor 40 directly opposite from the actuator 30 on the fluid line 100. This placement of the sensor 40 eliminates and/or reduces latency in detecting the position of the valve 22 since there is nothing between the sensor 40 and the valve assembly 20.

In some examples, the valve assembly 20 provides a redundant system to determine the rotational position of the valve 22. In addition to the detection by the sensor 40, the valve assembly 20 also monitors current usage of the actuator 30. This can include sensing the current to move the valve 22 between the various rotational positions.

The valve assembly 20 can be used in a variety of different contexts. In some examples, the system 15 is used on a fuel line within a vehicle 110, such as a commercial aircraft. Other examples include but are not limited to use along fluid lines within various manufacturing settings, other vehicles such as land-based and water-based vehicles, water supply systems, fluid lines for chemical processes, and petroleum refining systems.

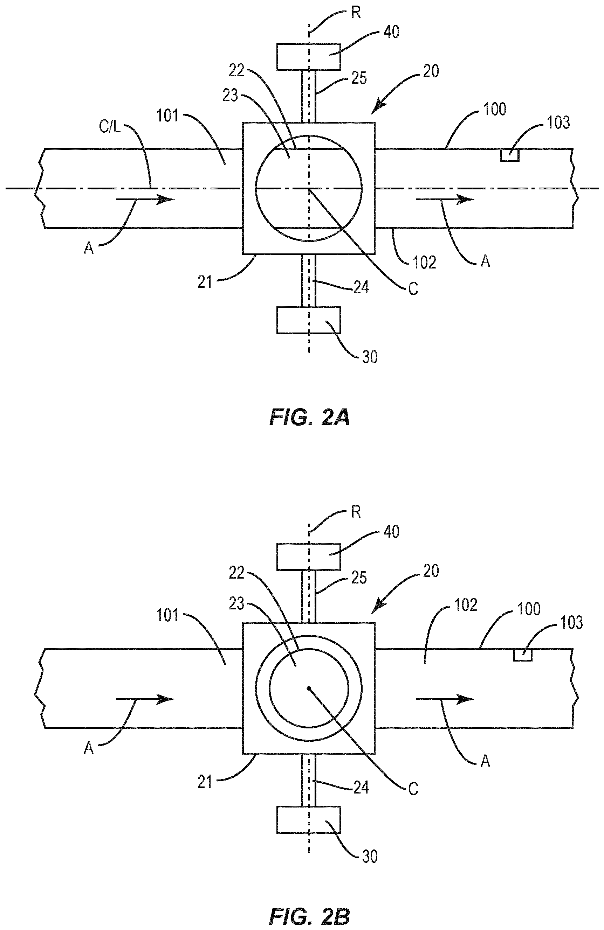

Figures 2A and 2B illustrate a valve assembly 20 positioned along fluid line 100. The fluid line 100 includes a centerline C/L and can have various shapes and sizes. In some examples, the fluid line 100 is a pipe or other like conduit for containing fluid. Figures 2A and 2B illustrate the fluid line 100 providing for fluid flow in a direction indicated by arrows A. The fluid line 100 includes an inlet section 101 that is upstream from the valve assembly 20 and a downstream outlet section 102.

The valve assembly 20 can include a variety of different configurations for control fluid flow. The different configurations include a valve 22 sized to fit within the fluid line 100 and be rotated to adjust an effective opening in the fluid line 100 to control the flow of fluid. Examples include but are not limited to ball valves and butterfly valves. In some examples such as with a ball valve, the valve 22 has a substantially spherical shape. In another example such as a butterfly valve, the valve 22 has an elongated and/or elliptical shape. In the example of Figures 2A and 2B, a channel 23 extends through the valve 22 and provides for fluid to flow. The channel 23 can include various shapes and sizes. In some examples, the channel 23 has a circular sectional shape that extends straight through the valve 22 and has a centerline C. In the example of Figures 2A and 2B, the valve assembly 20 includes a valve body 21 (referred to equivalently herein as a "housing") that connects to the fluid line 100. The valve 22 is positioned in the valve body 21 and is aligned along the fluid line 100 when the valve assembly 20 is connected.

Figure 2A illustrates the valve assembly 20 in an open position with the centerline C of the channel 23 aligned with the centerline C/L of the fluid line 100. Figure 2B illustrates the valve assembly 20 in a closed position that prevents the passage of fluid. The valve 22 has been rotated with the channel 23 moved away from the fluid line 100 such that the valve 22 extends across the fluid line 100 and prevents fluid flow. The valve assembly 20 is configured to be positioned at a variety of different intermediate positions.

A drive shaft 24 and a spindle 25 (referred to equivalently herein as a "follower shaft") are each connected to and extend outward from the valve 22. The drive shaft 24 and spindle 25 enable mounting the valve 22 in the valve body 21. Additionally or alternatively, the drive shaft 24 enables applying a driving force to rotate the valve 22. The spindle 25 extends outward in a direction away from the drive shaft 24. In some examples, the drive shaft 24 and spindle 25 extend outward from opposing sides of the valve 22 and are aligned along a rotational axis R.

The valve 22 of the valve assembly 20 is rotatable between an open position to allow for fluid to flow through the valve 22 and a closed position that prevents the flow of fluid. In some examples, the open position includes the centerline C of the channel 23 aligned with the centerline C/L of the fluid line 100. In some examples, the closed position includes the centerline C of the channel 23 perpendicular to the centerline C/L of the fluid line 100. This can include rotating the valve 22 90° (90 degrees) between the open position and the closed position. In some examples, the open and/or closed positions position the valve 22 at different rotational positions. The amount of rotation between the open and closed positions can vary with some examples including rotation of less than 90°.

The valve 22 is further positionable at one or more intermediate rotational positions. The different rotational positions align the channel 23 at different angular orientations relative to the fluid line 100. The different rotational positions provide for different intermediate amounts of fluid flow. In some examples, the 22 can be positioned at one or more selected rotational positions (e.g., ¼ open, ½ open, ¾ open). In some examples, the valve 22 can be selectively positioned at any desired rotational position. In some examples, a fluid flow/pressure sensor 103 is positioned within the fluid line 100 to detect an amount of fluid flow/pressure. The valve 22 can be positioned at the necessary angular position to obtain the desired fluid flow.

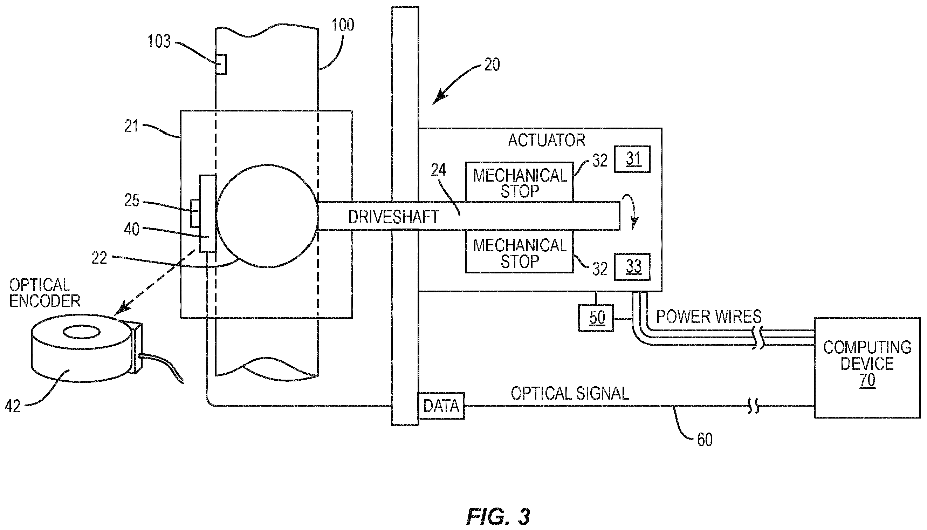

In some examples, an actuator 30 is mounted to the drive shaft 24 to rotate the valve 22 between the various rotational positions. As illustrated in Figure 3, the actuator 30 includes an electric motor 31 configured to provide power to rotate the drive shaft 24. Examples of motors 31 include but are not limited to stepper motors and servomotors. The actuator 30 is configured to rotate the drive shaft 24 at various speeds to control the rotational position of the valve 22. In some examples, the actuator 30 includes a drive train 33 that includes various components such as gears to couple the motor 31 to the drive shaft 24.

In some examples, the actuator 30 is mounted to other components than the drive shaft 24 to rotate the valve 22. In some examples, the assembly does not include a drive shaft and the actuator 30 is configured to rotate the valve 22 in different manners. In some examples, the actuator 30 is connected to the valve body 22. In some examples, the valve 22 is remotely driven.

In some examples, a current sensor 50 detects an electrical current of the motor 31. Examples of current sensors 50 include but are not limited to current transducers, and current sense transformers, etc. In another example in which the valve assembly 20 is used within a vehicle 110, a control circuit within the vehicle 110 monitors the current and detects the current and/or a current outside of a predetermined range.

The current sensor 50 provides a signal indicative of the current being used by the motor 31. In some example, one or more mechanical stops 32 are positioned at the drive shaft 24. The stops 32 prevent rotation of the drive shaft 24 beyond a predetermined rotational position. A change in current of the motor 31 occurs when the stops 32 are contacted to prevent further rotation. This change is current is detected by the current sensor 50.

In some examples, the current sensor 50 includes a proximity data concentrator that includes a pulse width modulation speed and position control circuit to monitor the current. The current sensor 50 detects a current of the actuator 30 while the valve 22 is moved between the angular orientations.

Sensor 40 detects a rotational position of the valve 22. The sensor 40 can detect one or more components of the valve assembly 20 including the spindle 25 and the valve 22. The sensor 40 can include a variety of different configurations including but not limited to an optical encoder 42. In some examples, the optical encoder 42 includes a light source that emits light through a coded disk. An optical encoder 42 provides precision for a variable rate of movement of the valve 22 when controlling fuel flows with a high volumetric rate, such as an aircraft refuel system.

In some examples as illustrated in Figure 3, the sensor 40 is positioned within the valve body 21 of the valve assembly 20. This positioning provides for the sensor 40 to be positioned within an interior space of the valve body 21 to protect the sensor 40. In one example in which the valve assembly 20 is used with a fuel tank environment, the valve body 21 isolates the sensor 40 from the environment which could otherwise damage the sensor 40. In other examples, the sensor 40 is positioned outside of the valve body 21.

The sensor 40 provides signals to the computing device 70. In some examples, signals are transmitted over an optical fiber 60 that extends between the sensor 40 and the computing device 70. In one example in which the valve assembly 20 is used in a fuel tank environment, the optical fiber provides for transmitting signals in a safe and effective manner. In some examples, other technologies are used such as but not limited to a resolver.

In some examples, the sensor 40 is placed directly on the valve 22 and/or spindle 25 opposite from the actuator 30. In one specific example, the sensor 40 is positioned along the rotational axis R opposite from the actuator 30. This placement helps to reduce and/or ensure latent failures which could occur between valve 22 and the actuator 30.

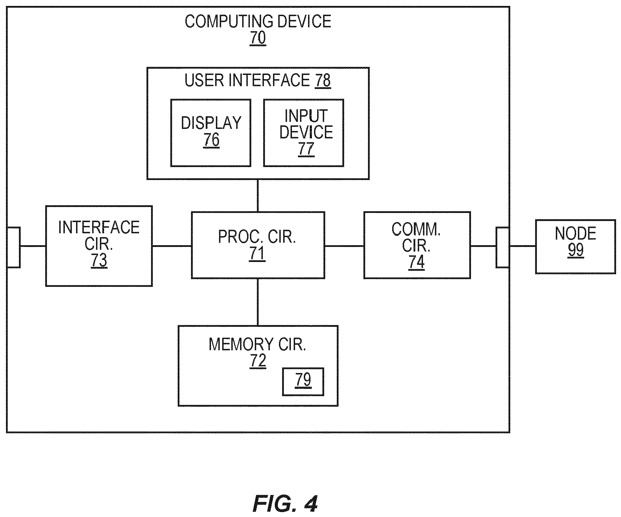

The computing device 70 controls the rotation of the valve 22. Figure 4 schematically illustrates a computing device 70 that includes processing circuitry 71, memory circuitry 72, interface circuitry 73, and communications circuitry 74. The processing circuitry 71 controls overall operation of the valve assembly 20 according to program instructions 79 stored in the memory circuitry 72. The processing circuitry 71 includes one or more circuits, microcontrollers, microprocessors, hardware, or a combination thereof. The processing circuitry 71 can include various amounts of computing power to provide for the needed functionality.

Memory circuitry 72 includes a non-transitory computer readable storage medium storing program instructions, such as a computer program product 79, that configures the processing circuitry 71 to implement one or more of the techniques discussed herein. Memory circuitry 72 can include various memory devices such as, for example, read-only memory, and flash memory. Memory circuitry 72 can be a separate component as illustrated in Figure 4 or can be incorporated with the processing circuitry 71. Alternatively, the processing circuitry 71 can omit the memory circuitry 72, e.g., according to at least some embodiments in which the processing circuitry 71 is dedicated and non-programmable.

The interface circuitry 73 provides for receiving signals from the actuator 30 and sensors 40, 50. The interface circuitry 73 can provide for one-way communications from one or more of the components and/or two-way communications. The communications can be through wireless and/or wired means. In some examples, the communication occurs through an optical fiber 60 and power lines.

The communication circuitry 74 provides for communications to and from the computing device 70. The communications can include communications with other circuitry on the vehicle (e.g., vehicle control system) and/or communications with a remote node 99, such as vehicle maintenance personnel who monitor the operation of the vehicle. In some examples, the communications circuitry provides for receiving signals regarding the positioning of the valve 22 and also of any issues with the valve assembly 20. Communications circuitry 74 provides for sending and receiving data with one or more remote nodes 99. In some examples in which the valve assembly 20 is mounted in a vehicle 110, the remote nodes 99 are located off of the vehicle 110.

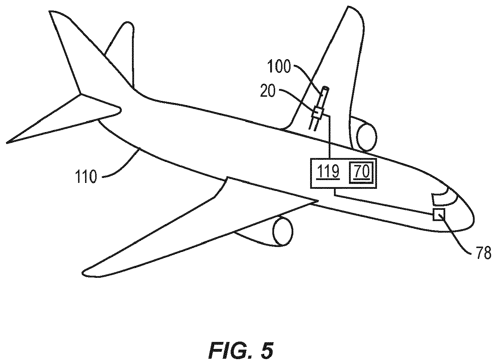

A user interface 78 provides for a user to access data about the valve assembly 20. The user interface 78 can include one or more input devices 77 such as but not limited to a keypad, touchpad, roller ball, and joystick. The user interface 78 can also include one or more displays 76 for displaying information regarding the operation of the valve assembly 20. In some examples, the user interface 78 provides for a user to enter commands to the processing circuitry 71 to control the position of the valve assembly 20. In one example as illustrated in Figure 5, the user interface 78 is positioned on a flight deck of an aircraft to provide for indicating the operational status of the valve assembly 20 and to input signals to control the valve assembly 20.

In some examples, the computing device 70 is a stand-alone unit that is independent and functions to just monitor and/or control the operation of the valve assembly 20. In other examples, the computing device 70 is integrated into another system that performs additional functions. Figure 5 illustrates an example in which the computing device 70 is integrated into a system control computing device 119 of a vehicle 110. The functions of the computing device 70 are performed by the components of the system control computing device 119 which oversees the operation of the vehicle 110.

In yet another example (not illustrated), the computing device 70 is located remotely from the vehicle 110. Some examples include the computing device 70 being remote from the vehicle 110 such as a ground control or ground maintenance for an aircraft. The vehicle 110 is configured to transmit signals from the sensors 40, 50 to the ground-based computing device 70.

The valve assembly 20 provides for advantages over existing designs. The valve assembly 20 directly monitors the position of the valve 22. The direct valve body position indication allows for direct failure detection versus previous systems that derived a failure from a position of the actuator 30. This direct indication allows for detection of the position of the valve 22 and drive train failures. Valve 22 position indication also enables the ability to command the valve 22 to a specific angular position, such as an intermediate, and partially open/closed state. The direct valve 22 position indication also provides for varying the rate of closure for surge pressure reduction as well increase refuel shutoff precision and provides direct information for health monitoring.

The use of optical sensing directly on the valve 22 and monitoring the control circuit electrical current provides redundant indication. In examples in which the valve assembly 20 is used on an aircraft, this ensures personnel on the flight deck will know the precise location of the valve 22.

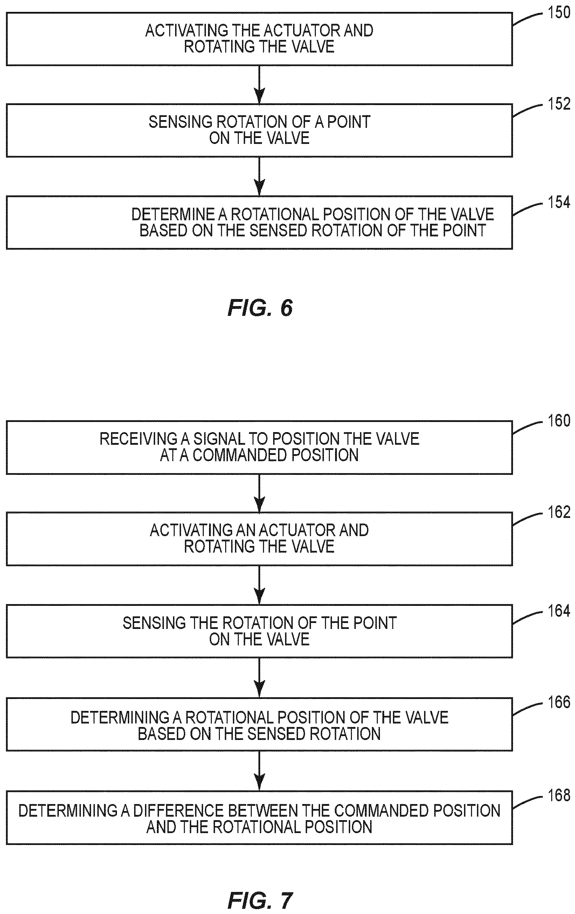

Figure 6 illustrates a method of determining a rotational position of a valve 22 in a valve assembly 20 that is mounted to a fluid line 100. The method includes activating an actuator 30 that is connected to a valve 22 and rotating the valve 22 (block 150). The actuator 30 is connected to a first side of the valve 22. The method also includes sensing rotation of a point on the valve 22 (block 152). The point can vary and can include but is not limited being on the spindle 25 and on the valve 22. The point is on a second side of the valve 22 opposite from the first side. A rotational position of the valve 22 is determined based on the sensed rotation of the point (block 154).

Figure 7 illustrates a method of determining a rotational position of a valve 22 that is positioned within a fluid line 100. A signal is received to position the valve 22 at a commanded position (block 160). In some examples, the commanded position is received from a person on the flight deck of an aircraft such as a pilot. An actuator 30 is activated and the valve 22 is rotated based on the commanded position (block 162). The rotation of a point on the valve 22 is sensed (block 164). The point is positioned on the valve 22 away from the actuator 30. A rotational position of the valve 22 is determined based on the sensed rotation of the point (block 166). A difference is determined between the commanded position and the rotational position (block 168).

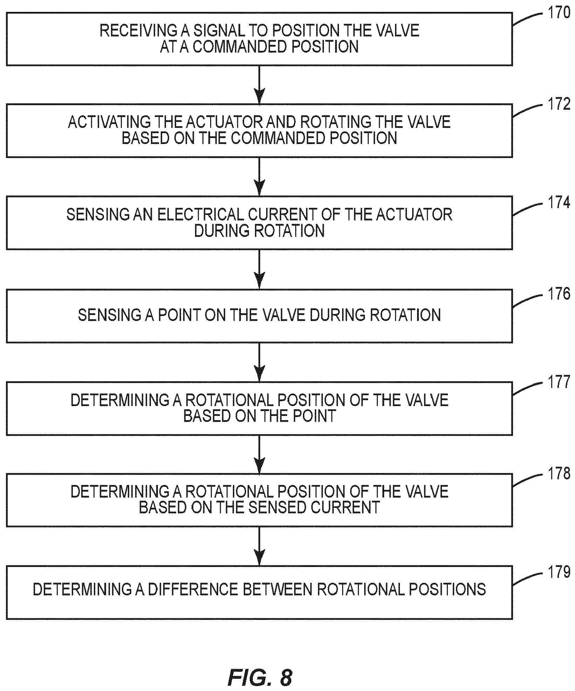

Figure 8 illustrates a method of determining a rotational position of a valve 22 that is positioned within a fluid line 100. A signal is received to position the valve 22 at a commanded position (block 170). An actuator 30 is activated to rotate the valve 22 based on the commanded position (block 172). An electrical current of the actuator 30 is sensed while the valve 22 is being rotated (block 174). A point on the valve 22 is sensed during the rotation (block 176). The point is on a side of the valve 22 away from the actuator 30. A rotational position of the valve 22 is determined based on the sensed rotation of the point (block 177). A rotational position of the valve body is determined based on the sensed current (block 178). A difference is determined between the determined rotational positions (block 179).

Further, the current disclosure comprises embodiments according to the following clauses:
Clause 1. A valve assembly that controls a flow of fluid along a fluid line, the valve assembly comprising:
   a valve body sized to fit within the fluid line with the valve body configured to rotate within the fluid line between an open position and a closed position;
   a drive shaft connected to and that extends outward from a first side of the valve body;
   an actuator comprising a motor with the actuator connected to the drive shaft and configured to rotate the valve body between the open position and the closed position; and
   a sensor configured to sense a rotation position of the valve body with the sensor positioned at a second side of the valve body away from the actuator.
Clause 2. The valve assembly of clause 1, wherein the sensor is an optical encoder connected directly to the valve body.
Clause 3. The valve assembly of clause 1 or 2, further comprising a housing with an inlet and an outlet to mount to the fluid line and with the housing comprising an interior space sized to receive the sensor to protect the sensor.
Clause 4. The valve assembly of any of clauses 1 to 3, further comprising a computing device configured to:
   activate the actuator to move the valve body to a commanded position within the fluid line; and
   receive signals from the sensor indicating the rotational position of the valve body within the fluid line.
Clause 5. The valve assembly of clause 4, wherein the computing device is configured to detect a difference between the commanded position of the valve body and the sensed rotational position of the valve body.
Clause 6. The valve assembly of clause 4 or 5, wherein the sensor is a rotation sensor and further comprising a current sensor configured to detect a current of the motor with the computing device configured to determine a position of the valve body based on the current of the motor and to compare the position with the rotational position of the valve body based on the signals from the rotation sensor.
Clause 7. The valve assembly of any of clauses 1 to 6, wherein the sensor is placed directly on the valve body.
Clause 8. The valve assembly of any of clauses 1 to 7, wherein the sensor detects the rotation of the valve body based on movement on a point on a second side of the valve body that is opposite from the drive shaft on a first side of the valve body.
Clause 9. The valve assembly of any of clauses 1 to 8, wherein the valve body is a ball valve.
Clause 10. A valve assembly that controls a flow of fluid along a fluid line, the valve assembly comprising:
   a valve body sized to fit within the fluid line and configured to rotate within the fluid line between an open position and a closed position;
   a spindle connected to and extending outward from a second side of the valve body;
   an actuator configured to rotate the valve body;
   a current sensor configured to detect an electrical current of the actuator during rotation of the valve body; and
   a rotation sensor configured to detect a rotational position of the valve body.
Clause 11. The valve assembly of clause 10, wherein the rotation sensor is positioned directly on the spindle to detect the rotational position of the valve.
Clause 12. The valve assembly of clause 10 or 11, further comprising a computing device configured to:
   receive first signals from the current sensor and timing to determine a first rotational position of the valve body based on the first signals;
   receive second signals from the rotation sensor and determine a second rotational position of the valve body based on the second signals; and
   determine a difference between the first rotational position and the second rotational position.
Clause 13. The valve assembly of clause 12, wherein the computing device is configured to transmit an error signal when the difference between the first rotational position and the second rotational position is greater than a predetermined amount.
Clause 14. The valve assembly of any of clauses 10 to 13, further comprising a housing configured to connect to the fluid line with the housing comprising an interior space configured to house the spindle and the rotation sensor.
Clause 15. A method of determining a rotational position of a valve assembly that is positioned within a fluid line, the method comprising:
   activating an actuator that is connected to a first side of a valve body;
   rotating the valve body within the fluid line with the actuator;
   sensing rotation of a point on a second side of the valve body that is away from the first side; and
   determining a rotational position of the valve body based on the sensed rotation of the point.
Clause 16. The method of clause 15, further comprising:
   receiving a command to rotate the valve body to a predetermined position within the fluid line;
   activating the actuator and rotating the valve body from an initial position to a second rotational position; and
   sensing the rotation of the point on the valve body.
Clause 17. The method of clause 16, further comprising determining that the rotational position of the valve body based on the sensed rotation is different than the predetermined position.
Clause 18. The method of any of clauses 15 to 17, further comprising:
   monitoring a current of the actuator and determining the rotational position of the valve body based on the current and timing; and
   comparing the rotational position of the valve based on the current and timing with the rotational position of the valve based on the sensed rotation.
Clause 19. The method of clause 18, further comprising transmitting a signal when a difference between the rotational positions exceeds a predetermined amount.
Clause 20. The method of any of clauses 15 to 19, further comprising rotating the valve body between a closed position and an open position.

The present invention may be carried out in other ways than those specifically set forth herein without departing from essential characteristics of the present aspects of the disclosure. The present aspects are to be considered in all respects as illustrative and not restrictive.

## Claims

1. A valve assembly that controls a flow of fluid along a fluid line, the valve assembly comprising:
a valve body (21) sized to fit within the fluid line with the valve body (21) configured to rotate within the fluid line between an open position and a closed position;
a drive shaft (24) connected to and that extends outward from a first side of the valve body (21);
an actuator (30) comprising a motor (31) with the actuator (30) connected to the drive shaft (24) and configured to rotate the valve body (21) between the open position and the closed position; and
a sensor (40) configured to sense a rotation position of the valve body (21) with the sensor (40) positioned at a second side of the valve body (21) away from the actuator (30).

2. The valve assembly of claim 1, wherein the sensor (40) is an optical encoder connected directly to the valve body.

3. The valve assembly of claim 1 or 2, further comprising a housing with an inlet and an outlet to mount to the fluid line and with the housing comprising an interior space sized to receive the sensor (40) to protect the sensor.

4. The valve assembly of any of claim 1, further comprising a computing device (70) configured to:
activate the actuator (30) to move the valve body (21) to a commanded position within the fluid line; and
receive signals from the sensor (40) indicating the rotational position of the valve body (21) within the fluid line.

5. The valve assembly of claim 4, wherein the computing device (70) is configured to detect a difference between the commanded position of the valve body (21) and the sensed rotational position of the valve body (21).

6. The valve assembly of claim 4 or 5, wherein the sensor (40) is a rotation sensor and further comprising a current sensor configured to detect a current of the motor (31) with the computing device (70) configured to determine a position of the valve body (21) based on the current of the motor (31) and to compare the position with the rotational position of the valve body (21) based on the signals from the rotation sensor.

7. The valve assembly of any of claims 1 to 6, wherein the sensor (40) is placed directly on the valve body (21).

8. The valve assembly of any of claims 1 to 7, wherein the sensor (40) detects the rotation of the valve body (21) based on movement on a point on a second side of the valve body (21) that is opposite from the drive shaft (24) on a first side of the valve body (21).

9. The valve assembly of any of claims 1 to 8, wherein the valve body (21) is a ball valve.

10. A valve assembly that controls a flow of fluid along a fluid line, the valve assembly comprising:
a valve body (21) sized to fit within the fluid line and configured to rotate within the fluid line between an open position and a closed position;
a spindle (25) connected to and extending outward from a second side of the valve body (21);
an actuator (30) configured to rotate the valve body (21);
a current sensor (50) configured to detect an electrical current of the actuator (30) during rotation of the valve body (21); and
a rotation sensor (40) configured to detect a rotational position of the valve body (21).

11. The valve assembly of claim 10, wherein the rotation sensor (40) is positioned directly on the spindle (25) to detect the rotational position of the valve.

12. The valve assembly of claim 10 or 11, further comprising a computing device (70) configured to:
receive first signals from the current sensor (50) and timing to determine a first rotational position of the valve body (21) based on the first signals;
receive second signals from the rotation sensor (40) and determine a second rotational position of the valve body (21) based on the second signals; and
determine a difference between the first rotational position and the second rotational position.

13. The valve assembly of claim 12, wherein the computing device (70) is configured to transmit an error signal when the difference between the first rotational position and the second rotational position is greater than a predetermined amount.

14. The valve assembly of any of claims 10 to 13, further comprising a housing configured to connect to the fluid line with the housing comprising an interior space configured to house the spindle (25) and the rotation sensor (40).

15. A method of determining a rotational position of a valve assembly that is positioned within a fluid line, the method comprising:
activating an actuator (30) that is connected to a first side of a valve body (21);
rotating the valve body (21) within the fluid line with the actuator (30);
sensing rotation of a point on a second side of the valve body (21) that is away from the first side; and
determining a rotational position of the valve body (21) based on the sensed rotation of the point.
